# NEUE EUROPÄISCHE PATENTSCHRIFT

(11) **EP 2 867 829 B2**
(45) Veröffentlichungstag und Bekanntmachung des Hinweises auf die Entscheidung über den Einspruch: **20.11.2019**
(45) Hinweis auf die Patenterteilung: 10.08.2016
(21) Anmeldenummer: 13730179.2
(22) Anmeldetag: 13.06.2013
(51) Int. Cl.: B42D 25/305, B42D 25/378, B42D 25/373, G06K 19/073, G06K 17/00

(54) **IDENTIFIKATIONSDOKUMENT**
IDENTIFICATION DOCUMENT
DOCUMENT D'IDENTIFICATION

(30) Priorität: 28.06.2012 DE 102012211150
(43) Veröffentlichungstag der Anmeldung: 06.05.2015
(73) Patentinhaber: Bundesdruckerei GmbH, 10969 Berlin (DE)
(72) Erfinder: WOLF, Andreas, 13158 Berlin (DE); RABELER, Uwe, 30453 Hannover (DE); SCHÜRING, Andreas, 30827 Garbsen (DE)
(74) Vertreter: Patentship Patentanwaltsgesellschaft mbH
(86) Internationale Anmeldenummer: PCT/EP2013/062217
(87) Internationale Veröffentlichungsnummer: WO 2014/001094

(56) Entgegenhaltungen:
- WO-A1-97/22086
- WO-A2-02/25600
- DE-A1- 4 221 305
- DE-A1- 19 645 084
- DE-A1-102008 011 299
- FR-A1- 2 483 112

## Beschreibung

Die vorliegende Erfindung betrifft ein Identifikationsdokument.

Die Offenlegungsschrift DE 196 450 84 A1 zeigt eine Identifikationskarte mit zusätzlichen Sicherheitsmerkmalen und ein Verfahren zu deren Herstellung.

Die Offenlegungsschrift WO 97/22086 A1 zeigt ein Zusatzsicherheitsmerkmal für Chipkarten.

Die Offenlegungsschrift FR 2 483 112 zeigt ein magnetisches Speicherelement.

Heutige Identifikationsdokumente sind in der Regel mit einem integrierten Prozessor zur Speicherung des Lichtbildes und biometrischer Merkmale ausgestattet. Nach der derzeitigen deutschen Gesetzlage ist jedoch auch ein Dokument mit zerstörtem oder defektem Prozessor gültig.

Moderne Identifikationsdokumente verfügen oft über einen integrierten Prozessor, auf welchem neben dem zum biometrisch Vergleich geeigneten Lichtbild oftmals auch weitere biometrische Daten digital signiert gespeichert sind, wie beispielsweise ein Fingerabdruck oder ein Irisbild, sowie eine Textkopie der gedruckten maschinenlesbaren Zone des Ausweisdokumentes.

Bei der Verifikation des Identifikationsdokumentes, wie beispielsweise an einem Grenzübergang, findet ein Abgleich zwischen dem aufgedruckten Lichtbild und dem auf dem elektronischen Prozessor gespeicherten Lichtbild statt. Auf diese Weise können Manipulationsversuche, wie beispielsweise der Austausch des eingedruckten Lichtbildes erkannt werden. Der weitere Abgleich der optisch personalisierten Daten, wie beispielsweise Name, Geburtsdatum, Seriennummer, Geschlecht oder Ablaufdatum, mit den auf dem Prozessor gespeicherten Daten ermöglicht die Erkennung weiterer Manipulationsversuche.

Nach der jeweiligen Gesetzeslage behält ein Identifikationsdokument jedoch auch mit zerstörtem oder defektem Prozessor oftmals seine Gültigkeit. Bei manipulierten Dokumenten, wie beispielsweise einem Lichtbildausweis mit zusätzlich elektronisch gespeichertem Lichtbild, wird in der Regel der Prozessor daher zerstört, um so einen elektronischen Abgleich zwischen gespeichertem und gedrucktem Lichtbild zu verhindern. Dies kann beispielsweise dadurch geschehen, dass das Identifikationsdokument mit dem Prozessor energiereichen elektromagnetischen Feldern aussetzt wird, welche den Prozessor zerstören. Ein Beispiel für diesen Fall ist das Einbringen des Identifikationsdokumentes für einige Sekunden in eine Mikrowelle. Von außen ist ein auf diese Weise zerstörtes Identifikationsdokument als solches nicht ohne weiteres erkennbar, sein integrierter Prozessor kann jedoch nicht mehr gelesen werden.

Die Empfehlungen der Internationalen Zivilluftfahrtorganisation ICAO legen in diesem Fall eine genauere Untersuchung des Dokumentes nahe. Ohne eine teure forensische Untersuchung kann aber nicht festgestellt werden, ob der Prozessor absichtlich oder unbeabsichtigt zerstört worden ist.

Es ist die Aufgabe der vorliegenden Erfindung, ein Identifikationsdokument bereitzustellen, bei dem ein Manipulationsversuch mittels elektromagnetischer Wellen einfach erkannt werden kann.

Diese Aufgabe wird durch einen Gegenstand mit den Merkmalen nach dem unabhängigen Anspruch gelöst. Vorteilhafte Weiterbildungen sind Gegenstand der unabhängigen Ansprüche, der Beschreibung und der Zeichnungen.

Gemäß einem ersten Aspekt wird die erfindungsgemäße Aufgabe durch ein Identifikationsdokument gelöst, mit einem Trägermaterial und einer elektrisch leitenden Induktionsstruktur, welche in dem Trägermaterial angeordnet ist, wobei die elektrisch leitende Induktionsstruktur einen Erwärmungsabschnitt aufweist, welcher durch einen in der elektrisch leitenden Induktionsstruktur induzierbaren elektrischen Strom erwärmbar ist. Der elektrische Strom kann beispielsweise mittels elektromagnetischer Wellen in der elektrisch leitenden Induktionsstruktur induziert werden. Die elektrisch leitende Induktionsstruktur ist somit gemäß einer Ausführungsform eine Empfangsantenne und kann beispielsweise in der Gestalt einer Schleifenantenne geformt sein.

Erfindungsgemäss läuft die elektrisch leitende Induktionsstruktur an einem Rand des Identifikationsdokumentes um. Die elektrisch leitende Induktionsstruktur verläuft somit entlang des Randes des Identifikationsdokumentes. Dadurch wird beispielsweise der technische Vorteil erreicht, dass die Fläche des Identifikationsdokumentes besonders gut ausgenutzt wird und sich eine hohe Induktion ergibt.

Gemäß einer Ausführungsform kann die elektrisch leitende Induktionsstruktur eine Antenne bilden oder aufweisen, beispielsweise eine Mehrfach-Antenne. Die Antenne kann derart ausgebildet sein bzw. der Erwärmungsbereich kann derart angeordnet sein, dass die Antenne bei einer Mikrowellenbestrahlung oder einer Strominduktion deformierbar bzw. auflösbar ist.

Die Induktionsstruktur kann gemäß einer Ausführungsform für eine induktive Kopplung ausgebildet sein. Gemäß einer weiteren Ausführungsform kann die Induktionsstruktur auch für die Übertragung elektromagnetischer Wellen, insbesondere für eine Fernfeldübertragung elektromagnetischer Wellen wie Mikrowellen im Zentimeterbereich, ausgebildet sein. So kann beispielsweise bei einer Einbringung des Identifikationsdokumentes in ein Mikrowellengerät ein Abstand zu beispielsweise einem Magnetron des Mikrowellengerätes von beispielsweise Lambda/6 überschritten werden, so dass in diesem Falle die elektromagnetische Kopplung überwiegen würde.

Dadurch wird beispielsweise der technische Vorteil erreicht, dass elektromagnetische Wellen, die bei einem Manipulationsversuch verwendet werden, eine durch den induzierten Strom verursachte Veränderung des Dokumentes verursachen. Diese Veränderung kann erfasst werden, so dass ein Manipulationsversuch mittels elektromagnetischer Wellen an der Karte festgestellt werden kann. Dadurch wird ein Indiz erhalten, ob ein elektronischer Prozessor absichtlich oder unabsichtlich zerstört worden ist.

Ein Identifikationsdokument ist beispielsweise ein Ausweisdokument, ein Reisepass, ein Wertdokument, ein Zahlungsmittel, beispielsweise eine Bankkarte oder eine Kreditkarte, ein Sicherheitsdokument, ein Führerschein, ein Unternehmensausweis, ein Frachtbrief oder ein Berechtigungsausweis. Im Allgemeinen kann ein Identifikationsdokument auch jedes andere Dokument sein, dessen Identität und Echtheit bestätigt werden soll.

Das Trägermaterial des Identifikationsdokumentes kann ein- oder mehrlagig bzw. papier- und/oder kunststoffbasiert sein. Das Trägermaterial kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen.

In einer vorteilhaften Ausführungsform weist der Erwärmungsabschnitt einen höheren elektrischen Widerstand als ein anderer leitfähiger Abschnitt der elektrisch leitenden Induktionsstruktur auf. Dadurch wird beispielsweise der technische Vorteil erreicht, dass sich der Erwärmungsabschnitt auf besonders einfache technische Weise bilden lässt.

In einer weiteren vorteilhaften Ausführungsform ist der Erwärmungsabschnitt durch eine Verjüngung der elektrisch leitenden Induktionsstruktur gebildet. Dadurch wird beispielsweise der technische Vorteil erreicht, dass sich der Erwärmungsabschnitt auf einfache technische Weise durch eine entsprechende Ausbildung der elektrisch leitenden Induktionsstruktur erzeugen lässt.

In einer weiteren vorteilhaften Ausführungsform ist der Erwärmungsabschnitt durch einen elektrischen Strom einer vorbestimmten Stromstärke elektrisch durchtrennbar. Dadurch wird beispielsweise der technische Vorteil erreicht, dass ein weiteres unabhängiges Indiz dafür geschaffen wird, dass das Identifikationsdokument einem erhöhten elektrischen Feld ausgesetzt worden ist.

In einer weiteren vorteilhaften Ausführungsform ist der Erwärmungsabschnitt an einer vorbestimmten Stelle im Trägermaterial angeordnet. Dadurch wird beispielsweise der technische Vorteil erreicht, dass eine Veränderung auf einfache technische Weise an der vorbestimmten Stelle erfasst werden kann.

In einer weiteren vorteilhaften Ausführungsform weist das Trägermaterial eine wärmeempfindliche Schicht auf, welche durch den Erwärmungsabschnitt erwärmbar ist. Dadurch wird beispielsweise der technische Vorteil erreicht, dass die wärmempfindliche Schicht ein weiteres Merkmal bildet, anhand dessen beurteilt werden kann, ob das Identifikationsdokument einem erhöhten elektrischen Feld ausgesetzt worden ist.

In einer weiteren vorteilhaften Ausführungsform ist die wärmeempfindliche Schicht oberhalb oder unterhalb des Erwärmungsabschnittes angeordnet. Dadurch wird beispielsweise der technische Vorteil erreicht, dass sich die von dem Erwärmungsabschnitt verursachte Wärmemenge effektiv auf die wärmeempfindliche Schicht überträgt und eine gute thermische Kopplung stattfindet.

In einer weiteren vorteilhaften Ausführungsform ist eine Farbe der wärmeempfindlichen Schicht bei Erwärmung irreversibel änderbar. Dadurch wird beispielsweise der technische Vorteil erreicht, dass mit einfachen optischen Mitteln oder sogar mit bloßem Auge ein Manipulationsversuch an dem Identifikationsdokument eindeutig erkennbar wird. Dieser Manipulationsversuch kann aufgrund der Irreversibilität des Farbumschlags nicht vertuscht werden.

In einer weiteren vorteilhaften Ausführungsform umfasst die wärmeempfindliche Schicht wärmeempfindliche Farbpigmente. Dadurch wird beispielsweise der technische Vorteil erreicht, dass die Farbpigmente in einem Anwendungsmedium verwendet werden können. Das Anwendungsmedium bezeichnet dabei einen Stoff, in den das Farbpigment eingearbeitet wird, beispielsweise einen Lack oder einen Kunststoff.

In einer weiteren vorteilhaften Ausführungsform umfasst die wärmeempfindliche Schicht Farbpigmente, deren spektrale Eigenschaften thermisch irreversibel beeinflussbar sind. Dadurch wird beispielsweise ebenfalls der technische Vorteil erreicht, dass mit einfachen optischen Mitteln oder sogar mit bloßem Auge ein Manipulationsversuch an dem Identifikationsdokument eindeutig erkennbar wird.

In einer weiteren vorteilhaften Ausführungsform ist die wärmeempfindliche Schicht an einer Oberfläche oder unterhalb einer Oberfläche des Trägermaterials angeordnet. Dadurch wird beispielsweise der technische Vorteil erreicht, dass ein Manipulationsversuch von außen erkennbar wird.

In einer weiteren vorteilhaften Ausführungsform ist eine Farbe oder eine Farbänderung der wärmeempfindlichen Schicht optisch erfassbar. Dadurch wird beispielsweise der technische Vorteil erreicht, dass eine Änderung der Farbe maschinell ausgewertet werden kann, beispielsweise bei einer Kontrolle des Identifikationsdokumentes.

In einer weiteren vorteilhaften Ausführungsform ist die elektrisch leitende Induktionsstruktur durch hitzebehandeltes Polycarbonat, durch Graphit oder durch eine metallische Schicht gebildet. Dadurch wird beispielsweise der technische Vorteil erreicht, dass sich die Induktionsstruktur besonders einfach herstellen lässt.

In einer weiteren vorteilhaften Ausführungsform ist oder umfasst die leitende Induktionsstruktur ferner einen metallischen Faden, der beispielsweise einen sogenannten Holofaden bzw. einen Sicherheitsfaden formt, welcher in dem Identifikationsdokument, beispielsweise in einem Führerschein oder auf einer Banknote angeordnet ist. Dadurch wird beispielsweise der technische Vorteil erreicht, dass sich die Induktionsstruktur besonders einfach herstellen lässt.

Bei einem Einbringen eines mit einem Sicherheitsfaden bzw. Holofaden versehenen Identifikationsdokumentes, insbesondere eines Wert- und/oder Sicherheitsdokumentes in ein Mikrowellengerät, können sich stehende Wellen in der leitfähigen Induktionsstruktur ausbilden. Der Erwärmungsabschnitt kann daher an einem Bauchbereich der stehenden Welle angeordnet werden, d.h. in einem Bereich, in dem eine Ausbildung einer stehenden Welle zu erwarten ist. Dadurch wird eine besonders effiziente Erfassung eines Nachweises eines Zerstörungsversuchs ermöglicht.

Gemäß einer Ausführungsform kann sich der Erwärmungsabschnitt über einen Bauch-Knoten-Abschnitt erstrecken. Auf diese Weise kann ein Mikrowelleneinfluss durch benachbarte Bereiche unterschiedlicher Farben angezeigt bzw. erfasst werden.

Bei einer Frequenz von beispielsweise 2450 MHz sind die Abstände von Wellen-Knoten und -Bäuchen vorhersagbar und betragen beispielsweise 2 cm.

Der Erwärmungsabschnitt kann gemäß einer Ausführungsform jedoch an einem beliebigen Aufbringungsort mit irreversibler Modifikation bei Erwärmung angeordnet sein.

In einer weiteren vorteilhaften Ausführungsform ist die elektrisch leitende Induktionsstruktur derart frequenzmäßig abgestimmt, dass bei einer Kommunikationsfrequenz aus dem Frequenzbereich zwischen 10 kHz bis 100MHz oder zwischen 100MHZ und 1000 MHZ der Erwärmungsabschnitt nicht erwärmt wird oder geringer erwärmt wird als bei einer Frequenz außerhalb des Frequenzbereichs zwischen 10 kHz bis 100MHz oder zwischen 100MHZ und 1000 MHZ, insbesondere geringer erwärmt wird als bei einer Mikrowellenfrequenz, und/oder dass der Erwärmungsabschnitt bei einer Mikrowellenfrequenz, insbesondere bei 1GHz +/-100MHZ, erwärmt wird, insbesondere stärker erwärmt wird als bei einer Kommunikationsfrequenz, beispielsweise bei der vorgenannten Kommunikationsfrequenz. Die frequenzmäßige Abstimmung kann beispielsweise durch eine Verstimmung der Resonanzfrequenz erreicht werden. So kann die elektrisch leitende Induktionsstruktur derart angepasst werden, dass deren Resonanzfrequenz außerhalb der Kommunikationsfrequenz liegt. Dadurch wird sichergestellt, dass der Erwärmungsabschnitt bei einer Frequenz im Mikrowellenbereich stärker erwärmt wird als bei einer Frequenz außerhalb des Mikrowellenbereichs.

Die frequenzmäßige Verstimmung bzw. Einstellung der Resonanzfrequenz kann beispielsweise durch eine geometrische Anpassung der elektrisch leitenden Induktionsstruktur bewirkt werden. Hierzu können zusätzlich passive elektrische Komponenten wie etwa Spule oder Kondensator oder elektrischer Widerstand vorgesehen sein. Grundsätzlich kann die Resonanzfrequenz der elektrisch leitenden Induktionsstruktur wie bei einer elektrischen Empfangsantenne angepasst werden. Die Kommunikationsfrequenz kann grundsätzlich eine derjenigen Frequenzen sein, welche für eine drahtlose Kommunikation geeignet ist.

In einer weiteren vorteilhaften Ausführungsform umfasst das Trägermaterial Polycarbonat. Dadurch wird beispielsweise der technische Vorteil erreicht, dass ein technisch besonders geeignetes, nicht-leitendes Trägermaterial verwendet wird.

Weitere Ausführungsbeispiele sind in den Zeichnungen dargestellt und werden im Folgenden näher beschrieben.

Es zeigen:
Fig. 1 eine Aufsicht auf ein Identifikationsdokument mit einer elektrisch leitenden Induktionsstruktur, deren dargestellte Anordnung nicht-erfindungsgemäss ist; und
Fig. 2 eine Querschnittsansicht des Identifikationsdokumentes.

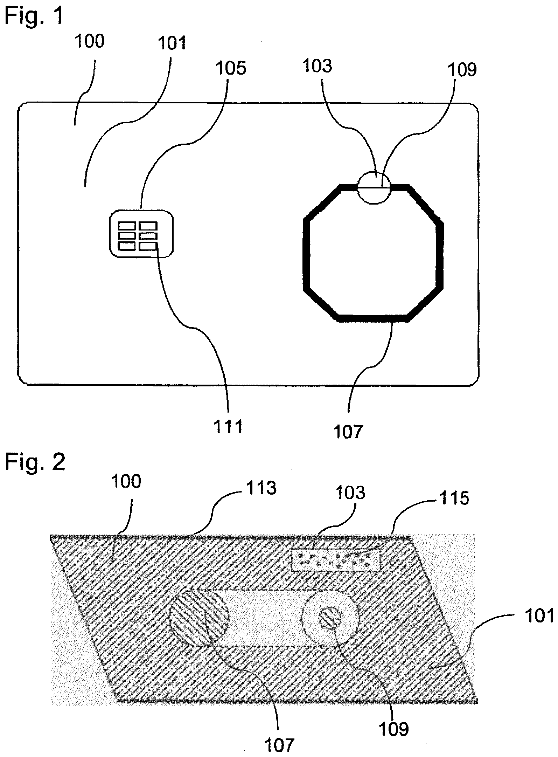

Fig. 1 zeigt ein Identifikationsdokument 100, das in der Gestalt einer Prozessorkarte realisiert werden kann. Das Identifikationsdokument 100 umfasst ein Trägermaterial 101, beispielsweise aus Polycarbonat, sowie eine wärmeempfindliche Schicht 103, welche in oder an dem Trägermaterial 101 angeordnet ist und ein wärmeempfindliches, optisches Merkmal bilden kann.

Das Identifikationsdokument 100 umfasst optional einen Prozessor 105. In dem Prozessor 105 sind beispielweise elektronische Daten gespeichert, die zur Identifikation einer Person oder einer Überprüfung der Echtheit des Identifikationsdokumentes herangezogen werden können. Der Prozessor 105 ist beispielsweise in das Trägermaterial integriert und weist die Kontakte 111 auf, über die sich die gespeicherten Daten auslesen lassen. Die wärmeempfindliche Schicht 103 ist vorgesehen, eine Manipulation mittels elektromagnetischer Wellen, um beispielsweise den Prozessor 105 zu zerstören, anzuzeigen. Der Prozessor 105 wird durch die wärmeempfindliche Schicht 103 jedoch nicht beeinflusst.

Das Identifikationsdokument 100 umfasst ferner eine elektrisch leitende Induktionsstruktur 107 mit einem definierten Erwärmungsabschnitt 109, welcher beispielsweise an einer vorbestimmten Stelle im Trägermaterial 101 angeordnet ist.

Der Erwärmungsabschnitt 109 ist als definierte Erwärmungsstelle in dem Identifikationsdokument 101 vorgesehen, welche sich bei Stromfluss durch den Erwärmungsabschnitt 109 erwärmt, um Wärme zu erzeugen, auf welche die wärmeempfindliche Schicht 103 reagiert. Die wärmeempfindliche Schicht 103 kann hierzu wärmeempfindliche Farbpigmente aufweisen, deren Farbe sich bei Wärme irreversibel ändert. Dadurch kann ein Manipulationsversuch mittels eines elektromagnetischen Feldes, welches in der Induktionsstruktur 107 einen elektrischen Strom induziert, festgehalten und optisch erkannt werden.

Die elektrisch leitende Induktionsstruktur 107 ist als eine geschlossene Leiterbahn mit einem Querschnitt gebildet, dessen Verjüngung den Erwärmungsabschnitt 109 bildet. Der Querschnitt der Leiterbahn kann außerhalb des Erwärmungsabschnitts 109 konstant sein. Dadurch entsteht an dem Erwärmungsabschnitt 109 ein erhöhter elektrischer Widerstand, wodurch sich der Erwärmungsabschnitt 109 stärker erwärmt als andere Abschnitte der elektrisch leitenden Induktionsstruktur 107.

Treffen elektromagnetische Wellen auf die elektrisch leitende Induktionsstruktur 107, wird darin ein Strom induziert. Erreicht der induzierte Strom beispielsweise eine bestimmte Stärke, erwärmt sich die elektrisch leitende Induktionsstruktur 107 an der Verjüngungsstelle, die den Erwärmungsabschnitt 109 bildet. Die Erwärmung kann dabei so stark sein, dass die elektrisch leitende Induktionsstruktur 107 an dem Erwärmungsabschnitt 109 durchschmilzt.

Die wärmeempfindliche Schicht 103 ist gemäß einer Ausführungsform über dem Erwärmungsabschnitt 109, beispielsweise in der Gestalt eines Farbfeldes, angeordnet. Die Erwärmung des Erwärmungsabschnitts 109 wird über eine thermische Kopplung an die wärmeempfindliche Schicht 103 übertragen. Die wärmeempfindliche Schicht 103 ist an der Oberseite des Identifikationsdokumentes gemäß einer Ausführungsform 100 sichtbar.

Die Querschnitte und die Geometrie der elektrisch leitenden Induktionsstruktur 107 sind gemäß einer Ausführungsform so bemessen, dass bei einem normalen Lesevorgang bis zum 10-fachen der nach ISO 14443 festgelegten maximal zulässigen Feldstärke ein Strom in der Schleife fließen kann, ohne diese zu zerstören. Bei größeren Feldstärken, wie beispielsweise in einer Mikrowelle, schmilzt hingegen die elektrisch leitende Induktionsstruktur 107 an dem Erwärmungsabschnitt 109, so dass sich eine Sollbruchstelle bilden kann, da dort der elektrische Widerstand am größten ist. Durch diese induzierte lokale Erwärmung des Erwärmungsabschnitts 109 wird die darüber liegende wärmeempfindliche Schicht 103 ebenfalls stark erwärmt.

Die Pigmentierung der Farbe der wärmeempfindlichen Schicht 103 ist beispielsweise so gewählt, dass diese bei starker Erwärmung ihre spektrale Reaktion deutlich und irreversibel ändert, so dass ein Farbumschlag sichtbar wird. Die Temperatur kann derjenigen Temperatur entsprechen, welche bei einer Schmelze des Erwärmungsabschnitts 109 entsteht.

Durch Temperaturveränderung wird so zum Beispiel aus einer weißen Farbe eine grüne Farbe oder aus schwarzer Farbe eine Türkisfarbe. Der Farbumschlag ist an der Oberfläche des Identifikationsdokumentes 100 sichtbar und kann optisch erfasst werden. Auf diese Weise kann festgestellt werden, dass das Identifikationsdokument einem starken elektromagnetischen Feld ausgesetzt worden ist.

Hierzu kann die wärmeempfindliche Schicht 103 wärmeempfindliche Pigmente aufweisen. Die verwendeten Pigmente können beispielsweise Komplexsalzverbindungen sein. Beispielsweise können die Pigmente der Farbe anorganische Farbpigmente sein, die bei Erreichen einer bestimmten Umschlagstemperatur einen erkennbaren Farbumschlag von einer ersten Farbe in eine zweite Farbe aufweisen. Vorteilhafterweise wird die Umschlagstemperatur so gewählt, dass bei einer normalen Erwärmung des Identifikationsdokumentes 100 bei bestimmungsgemäßem Gebrauch kein Farbumschlag stattfindet, beispielsweise wenn das Identifikationsdokument 100 Sonnenlicht ausgesetzt wird. Eine geeignete Umschlagstemperatur kann beispielsweise bei 100 °C liegen.

Das Vorliegen eines Farbumschlags kann darauf hindeuten, dass der elektronische Prozessor 105 wahrscheinlich zerstört worden ist. Die wärmeempfindliche Schicht 103 formt gemäß einer Ausführungsform daher ein optisches Merkmal, das ein Indiz für einen Manipulationsversuch darstellt. Die wärmeempfindliche Schicht 103 lässt sich sowohl manuell als auch maschinell prüfen. Im Falle des Vorliegens des Farbumschlags kann selektiv nach weiteren Manipulationsversuchen gesucht werden, wie beispielsweise nach einem Lichtbildaustausch.

Die elektrisch leitende Induktionsstruktur 107 kann beispielsweise durch flächiges Verbrennen von Polycarbonat gebildet werden, das als Trägermaterial 101 für das Identifikationsdokument 100 eingesetzt werden kann. In dem Polycarbonat können leitende Induktionsstrukturen aufgebracht werden, die sich optisch bei Einbringung in ein energiereiches elektromagnetisches Feld irreversibel verändern. In einer alternativen Ausführungsform kann die elektrisch leitende Induktionsstruktur 107 durch das Einbringen leitfähiger Substanzen, wie beispielsweise Leitsilber, als beispielsweise elektrisch leitende Leiterbahn erzeugt werden.

Im Allgemeinen ist die Induktionsstruktur nicht auf eine bestimmte Ausführungsform beschränkt und es können alle Formen und Materialien verwendet werden, die geeignet sind, bei Vorliegen erhöhter elektromagnetischer Strahlung eine Erwärmung im Trägermaterial zu bewirken.

Fig. 2 zeigt eine Querschnittsansicht durch das Identifikationsdokument 100 mit der wärmeempfindlichen Schicht 103 zur Anzeige eines Manipulationsversuches. Das Identifikationsdokument 100 weist eine Oberfläche 113 auf, auf der die wärmeempfindliche Schicht 103 angeordnet sein kann.

Die Induktionsstruktur 107 ist im Querschnitt kreisförmig im Inneren des Trägermaterials 101 des Identifikationsdokumentes 100 angeordnet. Der Erwärmungsabschnitt 109 ist beispielsweise durch eine Verjüngungsstelle mit geringerem Querschnitt als übrige Abschnitte der Induktionsstruktur 107 gebildet und weist daher einen höheren Widerstand auf.

Wird ein elektrischer Strom in der Induktionsstruktur 107 induziert, erwärmt sich der Erwärmungsabschnitt 109, so dass die dabei freiwerdende thermische Energie zumindest zum Teil an die wärmeempfindliche Schicht 103, welche als mit Farbpigmenten 115 pigmentiertes Farbfeld ausgeführt sein kann, übertragen wird. Durch die übertragene Energie werden die Farbpigmente 115 in der wärmeempfindlichen Schicht beispielsweise zu einer thermischen Reaktion veranlasst, durch die sie ihre Farbe ändern. Diese Farbänderung kann dann von außen erkannt werden und einen Manipulationsversuch anzeigen.

In einer anderen Ausführungsform kann zwischen dem Erwärmungsabschnitt 109 und der wärmeempfindlichen Schicht 103 ein thermisch leitendes Element, wie beispielsweise ein Metallelement, angeordnet sein, um die thermische Energie von dem Erwärmungsabschnitt 109 an die wärmeempfindlichen Schicht 103 zu übertragen.

## Patentansprüche

1. Identifikationsdokument (100) mit folgenden Merkmalen:
einem Trägermaterial (101);
einer elektrisch leitenden Induktionsstruktur (107), welche in dem Trägermaterial (101) angeordnet ist, wobei die elektrisch leitende Induktionsstruktur (107) an einem Rand des Identifikationsdokumentes (100) umläuft, und wobei die elektrisch leitende Induktionsstruktur (107) einen Erwärmungsabschnitt (109) aufweist, welcher durch einen in der elektrisch leitenden Induktionsstruktur (107) induzierbaren elektrischen Strom erwärmbar ist.

2. Identifikationsdokument (100) nach Anspruch 1, wobei der Erwärmungsabschnitt (109) einen höheren elektrischen Widerstand als ein anderer leitfähiger Abschnitt der elektrisch leitenden Induktionsstruktur (107) aufweist.

3. Identifikationsdokument (100) nach Anspruch 1 oder 2, wobei der Erwärmungsabschnitt (109) durch eine Verjüngung der elektrisch leitenden Induktionsstruktur (107) gebildet ist.

4. Identifikationsdokument (100) nach einem der vorstehenden Ansprüche, wobei der Erwärmungsabschnitt (109) durch einen elektrischen Strom einer vorbestimmten Stromstärke elektrisch durchtrennbar ist.

5. Identifikationsdokument (100) nach einem der vorstehenden Ansprüche, wobei der Erwärmungsabschnitt (109) an einer vorbestimmten Stelle im Trägermaterial (101) angeordnet ist.

6. Identifikationsdokument (100) nach einem der vorstehenden Ansprüche, wobei das Trägermaterial (101) eine wärmeempfindliche Schicht (103) aufweist, welche durch den Erwärmungsabschnitt (109) erwärmbar ist.

7. Identifikationsdokument (100) nach Anspruch 6, wobei die wärmeempfindliche Schicht (103) oberhalb oder unterhalb des Erwärmungsabschnittes (109) angeordnet ist.

8. Identifikationsdokument nach einem der Ansprüche 6 oder 7, wobei eine Farbe der wärmeempfindlichen Schicht (103) bei Erwärmung irreversibel änderbar ist.

9. Identifikationsdokument (100) nach einem der Ansprüche 6 bis 8, wobei die wärmeempfindliche Schicht (103) wärmeempfindliche Farbpigmente (115) umfasst.

10. Identifikationsdokument (100) nach einem der Ansprüche 6 bis 9, wobei die wärmeempfindliche Schicht (103) Farbpigmente (115) umfasst, deren spektrale Eigenschaften thermisch irreversibel beeinflussbar sind.

11. Identifikationsdokument (100) nach einem der Ansprüche 6 bis 10, wobei die wärmeempfindliche Schicht (103) an einer Oberfläche (113) oder unterhalb einer Oberfläche (113) des Trägermaterials (101) angeordnet ist.

12. Identifikationsdokument (100) nach einem der Ansprüche 6 bis 11, wobei eine Farbe oder eine Farbänderung der wärmeempfindlichen Schicht (103) optisch erfassbar ist.

13. Identifikationsdokument (100) nach einem der vorstehenden Ansprüche, wobei die elektrisch leitende Induktionsstruktur (107) durch hitzebehandeltes Polycarbonat, durch Graphit oder durch eine metallische Schicht gebildet ist.

14. Identifikationsdokument (100) nach einem der vorangehenden Ansprüche, wobei die elektrisch leitende Induktionsstruktur (107) derart frequenzmäßig abgestimmt ist, dass
bei einer Kommunikationsfrequenz aus dem Frequenzbereich zwischen 10 kHz bis 100MHz oder zwischen 100MHZ und 1000 MHZ der Erwärmungsabschnitt (109) nicht erwärmt wird oder geringer erwärmt wird als bei einer Frequenz außerhalb des Frequenzbereichs zwischen 10 kHz bis 100MHz oder zwischen 100MHZ und 1000 MHZ, insbesondere geringer erwärmt wird als bei einer Mikrowellenfrequenz, oder
der Erwärmungsabschnitt (109) bei einer Mikrowellenfrequenz, insbesondere bei 1GHz +/-100MHZ erwärmt wird, insbesondere stärker erwärmt wird als bei einer Kommunikationsfrequenz.

## Claims

1. An identification document (100) having the following features:
a substrate (101);
an electrically conductive inductive structure (107) disposed in the substrate (101),
wherein the electrically conductive inductive structure (107) extends around an edge of the identification document (100), and wherein the electrically conductive inductive structure (107) comprises a heating section (109) able to be heated by an electric current inducible in the electrically conductive inductive structure (107).

2. The identification document (100) according to claim 1, wherein the heating section (109) has a higher electrical resistance than another conductive section of the electrically conductive inductive structure (107).

3. The identification document (100) according to claim 1 or 2, wherein the heating section (109) is formed by a tapering of the electrically conductive inductive structure (107).

4. The identification document (100) according to any one of the preceding claims, wherein the heating section (109) can be electrically split by an electric current of a predetermined intensity.

5. The identification document (100) according to any one of the preceding claims, wherein the heating section (109) is arranged at a predetermined location in the substrate (101).

6. The identification document (100) according to any one of the preceding claims, wherein the substrate (101) comprises a heat-sensitive layer (103) able to be heated by the heating section (109).

7. The identification document (100) according to claim 6, wherein the heat-sensitive layer (103) is arranged above or below the heating section (109).

8. The identification document (100) according to any one of claims 6 or 7, wherein a color of the heat-sensitive layer (103) can be irreversibly changed upon heating.

9. The identification document (100) according to any one of claims 6 to 8, wherein the heat-sensitive layer (103) comprises heat-sensitive pigments (115).

10. The identification document (100) according to any one of claims 6 to 9, wherein the heat-sensitive layer (103) comprises pigments (115) having thermally irreversible spectral properties.

11. The identification document (100) according to any one of claims 6 to 10, wherein the heat-sensitive layer (103) is arranged on a surface (113) or below a surface (113) of the substrate (101).

12. The identification document (100) according to any one of claims 6 to 11, wherein a color or a change in color of the heat-sensitive layer (103) can be visually detected.

13. The identification document (100) according to any one of the preceding claims, wherein the electrically conductive inductive structure (107) is formed by heat-treated polycarbonate, by graphite or by a metallic layer.

14. The identification document (100) according to any one of the preceding claims,
wherein the electrically conductive inductive structure (107) is frequency-tuned such that
the heating section (109) is not heated or is heated to a lesser extent at a communication frequency in the frequency range of between 10 kHz and 100MHz or between 100MHZ and 1000 MHZ than at a frequency outside of the 10 kHz to 100MHz or 100MHZ to 1000 MHZ frequency range, particularly heated to a lesser extent than at a microwave frequency, or
the heating section (109) is heated at a microwave frequency, particularly at 1 GHz +/-100MHZ, in particular heated to a greater extent than at a communication frequency.

## Revendications

1. Document d'identité (100) comportant les caractéristiques suivantes:
un matériau de support (101);
une structure d'induction électriquement conductrice (107), qui est disposée dans le matériau de support (101), la structure d'induction électriquement conductrice (107) s'enroulant autour d'un bord du document d'identité (100), et la structure d'induction électriquement conductrice (107) présentant une section de chauffage (109), qui peut être chauffée par un courant électrique inductible dans la structure d'induction électriquement conductrice (107).

2. Document d'identité (100) selon la revendication 1, la section de chauffage (109) ayant une résistance électrique plus élevée qu'une autre section conductrice de la structure d'induction électriquement conductrice (107).

3. Document d'identité (100) selon la revendication 1 ou 2, la section de chauffage (109) étant formée par un rétrécissement de la structure d'induction électriquement conductrice (107).

4. Document d'identité (100) selon l'une des revendications précédentes, la section de chauffage (109) étant électriquement sécable par un courant électrique d'une intensité de courant prédéfinie.

5. Document d'identité (100) selon l'une des revendications précédentes, la section de chauffage (109) étant disposée dans une position prédéterminée dans le matériau de support (101).

6. Document d'identité (100) selon l'une des revendications précédentes, le matériau de support (101) comportant une couche thermosensible (103) qui peut être échauffée par la section de chauffage (109).

7. Document d'identité (100) selon la revendication 6, la couche thermosensible (103) étant disposée au-dessus ou au-dessous de la section de chauffage (109).

8. Document d'identité selon l'une des revendications 6 ou 7, une couleur de la couche thermosensible (103) étant modifiable de façon irréversible par chauffage.

9. Document d'identité (100) selon l'une des revendications 6 à 8, la couche thermosensible (103) comportant des pigments colorés thermosensibles (115).

10. Document d'identité (100) selon l'une des revendications 6 à 9, la couche thermosensible (103) comportant des pigments colorés (115) ayant des propriétés spectrales qui peuvent être influencées d'une façon thermique irréversible.

11. Document d'identité (100) selon l'une des revendications 6 à 10, la couche thermosensible (103) étant disposée sur une surface (113) ou au-dessous d'une surface (113) du matériau de support (101).

12. Document d'identité (100) selon l'une des revendications 6 à 11, une couleur ou un changement de couleur de la couche thermosensible (103) pouvant être détectée visuellement.

13. Document d'identité (100) selon l'une des revendications précédentes, la structure d'induction électriquement conductrice (107) étant formée d'un polycarbonate traité thermiquement, d'un graphite un d'une couche métallique.

14. Document d'identité (100) selon l'une des revendications précédentes, la structure d'induction électriquement conductrice (107) étant construite, en ce qui concerne la fréquence, d'une façon telle que
la section de chauffage (109) n'est pas chauffée si une fréquence de communication est comprise dans une bande de fréquence entre 10 kHz et 100 MHz ou entre 100 MHz et 1000 MHz ou elle est chauffée moins qu'à une fréquence au dehors de la bande de fréquence entre 10 kHz et 100 MHz ou entre 100 MHz et 1000 MHz, en particulier elle est moins chauffée qu'à une fréquence de micro-ondes, ou
la section de chauffage (109) est chauffée à une fréquence de micro-ondes, en particulier à 1 GHz +/- 100 MHz, en particulier elle est plus chauffée qu'à une fréquence de communication.
